# EUROPEAN PATENT APPLICATION

(11) **EP 2 549 691 A1**
(43) Date of publication of application: **23.01.2013**
(21) Application number: 11755674.6
(22) Date of filing: 16.03.2011
(51) Int. Cl.: H04L 12/56

(54) **ROUTE-MAP PROCESSING METHOD AND PROVIDER EDGE DEVICE**

(30) Priority: 18.03.2010 CN 201010138650
(71) Applicant: ZTE Corporation, Shenzhen, Guangdong 518057 (CN)
(72) Inventor: ZHANG, Yanxian, Guangdong 518057 (CN); YU, Tongquan, Guangdong 518057 (CN)
(74) Representative: Molnia, David
(86) International application number: PCT/CN2011/071877
(87) International publication number: WO 2011/113357

(57) **Abstract**

The invention provides a route-map processing method and a Provider Edge (PE) device. A first interface of a PE device is connected to a first Virtual Private Network (VPN), and a second interface of the PE device is connected to a second VPN. The method comprising: configuring a forward route-map from the first VPN to the second VPN for the first interface; the second interface generating a reverse route-map according to the forward route-map obtained from the first interface, or, the first interface generating a reverse route-map according to the configured forward route-map and announcing the generated reverse route-map to the second interface. The invention reduces the complexity of the route-map maintenance process.

## Description

### Field of the Invention

The present invention relates to the field of communications, and in particular to a route-map processing method and a Provider Edge (PE) device.

### Background of the Invention

With the acceleration of the merging of a mobile network and a fixed network, the time of full-service operations of an operator has come, thus it is needed to integrate the current network resources to reduce the operation cost. For example, the C network service of China Unicom is received by China Telecom; the original fixed-network client of China Telecom and the mobile network user of China Unicom are located in different Virtual Private Networks (VPNs), after recombination, China Telecom expects that the newly added users also can be interconnected and intercommunicated through the network device of China Telecom to converge the services effectively, so as to reduce the operation cost and improve the operation efficiency.

In order to realize the intercommunication between two VPNs, it is needed to realize the bidirectional transmission of a forward message and a corresponding reverse message; hereinafter, the two VPNs are marked as a first VPN and a second VPN, and it is regulated that the message from the first VPN to the second VPN is a forward message and the message from the second VPN to the first VPN is a reverse message.

In relevant art, in order to realize the bidirectional transmission of message, a user needs to manually configure route-maps for interfaces connected to the two VPNs, so that the interface connected to the first VPN, when receiving a forward message, sends the forward message according to a forward route-map configured by the user, and the interface connected to the second VPN, when receiving a reverse message, sends the reverse message according to a reverse route-map configured by the user, to finally realize the bidirectional forwarding of message, that is, to realize the intercommunication between two VPNs.

However, the method above needs the user to configure a route-map for each interface connected to the two VPNs, thus labor cost is increased, maintenance is too complicated and the requirement on maintenance resource is big.

### Summary of the Invention

The present invention provides a route-map processing method and a PE device to at least solve the problem above.

According to one aspect of the present invention, a route-map processing method is provided, wherein a first interface of a PE device is connected to a first VPN, and a second interface of the PE device is connected to a second VPN; the method comprises: configuring a forward route-map from the first VPN to the second VPN for the first interface; the second interface generating a reverse route-map according to the forward route-map obtained from the first interface, or, the first interface generating a reverse route-map according to the configured forward route-map and announcing the reverse route-map to the second interface.

After the step of the second interface generating a reverse route-map according to the forward route-map obtained from the first interface, or, the first interface generating a reverse route-map according to the configured forward route-map and announcing the reverse route-map to the second interface, the method further comprises: the second interface receiving a reverse message matched with the reverse route-map and sending the reverse message by using the reverse route-map.

The step of sending the reverse message by using the reverse route-map comprises: the second interface obtaining a reverse route policy by using the reverse route-map and sending the reverse message according to the reverse route pol icy.

After the step of configuring a forward route-map from the first VPN to the second VPN for the first interface, the method further comprises: the first interface receiving a forward message matched with the forward route-map and sending the forward message by using the forward route-map.

The step of sending the forward message by using the forward route-map comprises: the first interface obtaining a forward route policy by using the forward route-map and sending the forward message according to the forward route pol icy.

The Match item configuration of the forward route-map comprises the information of the first VPN, a source address and a destination address of a message to be matched; the Set item configuration of the forward route-map includes the information of the second VPN; the Match item configuration of the reverse route-map comprises the information of the second VPN, a source address and a destination address of a message to be matched; the Set item configuration of the reverse route-map includes the information of the first VPN.

According to another aspect of the present invention, a PE device is provided, comprising: a first interface connected to a first VPN and a second interface connected to a second VPN, wherein the first interface comprises: a configuration module configured to accept the configuration of a forward route-map from the first VPN to the second VPN; a generation module configured to generate a reverse route-map according to the forward route-map; an announcement module configured to announce the reverse route-map to the second interface; the second interface comprises: a first receiving module configured to receive the reverse route-map.

The second interface further comprises: a second receiving module configured to receive a reverse message matched with the reverse route-map; a sending module configured to send the reverse message by using the reverse route-map.

According to another aspect of the present invention, a PE device is further provided, comprising a first interface connected to a first VPN and a second interface connected to a second VPN, wherein the first interface comprises: a configuration module configured to accept the configuration of a forward route-map from the first VPN to the second VPN; the second interface comprises: a forward map obtaining module configured to obtain the forward route-map from the first interface; a generation module configured to generate a reverse route-map according to the forward route-map.

The second interface further comprises: a receiving module configured to receive a reverse message matched with the reverse route-map; a sending module configured to send the reverse message by using the reverse route-map.

With the present invention, after the first interface connected to the first VPN accepts the configuration of the forward route-map from the first VPN to the second VPN, the second interface connected to the second VPN obtains the reverse route-map needed by forwarding the reverse message through the first interface, thus the problem of complex maintenance in relevant art that a user needs to configure the route-map corresponding to all interfaces connected to the intercommunicated VPNs (that is, the first VPN and the second VPN mentioned above) is solved, the complexity of the route-map maintenance process is reduced.

### Brief Description of the Drawings

Drawings, provided for further understanding of the present invention and forming a part of the specification, are used to explain the present invention together with embodiments of the present invention rather than to limit the present invention, wherein:
Fig. 1 shows a flowchart of a route-map processing method according to an embodiment of the present invention;
Fig. 2 shows a structure diagram of a PE device according to an embodiment of the present invention;
Fig. 3 shows a structure diagram of a PE device according to a preferred embodiment of the present invention;
Fig. 4 shows another structure diagram of a PE device according to an embodiment of the present invention;
Fig. 5 shows another structure diagram of a PE device according to a preferred embodiment of the present invention;
Fig. 6 shows a structure diagram of a PE device according to a preferred embodiment of the present invention; and
Fig. 7 shows a diagram of an application scene of the bidirectional message forwarding according to an embodiment of the present invention.

### Detailed Description of the Embodiments

The preferred embodiments are described in conjunction with the drawings as follows. It shall be understood that the preferred embodiments described herein are only used to describe and explain the present invention and shall not be construed as improper limitations on the same. The embodiments of the present application and the features of the embodiments can be combined with each other if there is no conflict.

Generally, two or more than two VPNs are connected through a PE device, wherein the PE device has interfaces connected to each of the VPNs; one VPN can correspond to one or more interfaces; generally, one interface corresponds to one VPN only. To implement the bidirectional transmission of message between two VPNs, a PE device is needed.

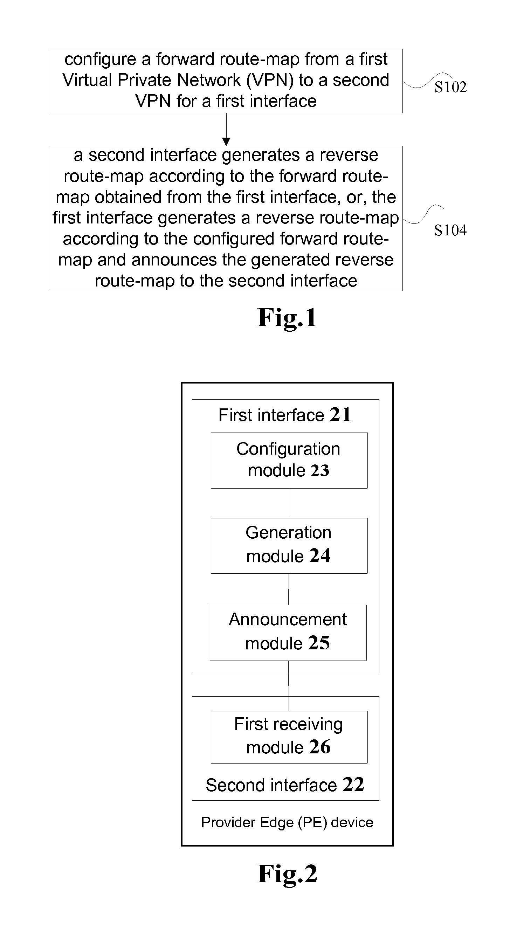

Fig. 1 shows a flowchart of a route-map processing method according to an embodiment of the present invention. In the embodiment, a first interface of a PE device is connected to a first VPN, and a second interface of the PE device is connected to a second VPN. As shown in Fig.1, the method comprises the following steps:
S102: a forward route-map is configured from the first VPN to the second VPN for the first interface; and
S104: the second interface generates a reverse route-map according to the forward route-map obtained from the first interface, or, the first interface generates a reverse route-map according to the configured forward route-map and announces the generated reverse route-map to the second interface.

In relevant art, in order to implement the intercommunication between VPNs, it is necessary for the user to configure the route-maps corresponding to the first interface and the second interface, thus maintenance is complex, the maintenance operation of the user and the maintenance cost are increased. In the method provided by the embodiment of the present invention, the second interface obtains the route-map corresponding to the second interface through the first interface, thereby the maintenance operation of the user is reduced and the complexity of the maintenance process of the route-map is reduced. By means of this method, interconnection and intercommunication between different private VPNs can be effectively implemented, the implementation method is also relatively simple, the impact caused by error configuration of user is reduced, and the reliability and stability of the system are improved.

Preferably, after S104, the method further comprises: the second interface receives a reverse message matched with the reverse route-map and sends the reverse message by using the reverse route-map. After receiving the reverse message, the second interface matches the reverse message by using the reverse route-map obtained through the first interface; if match succeeds, the second interface sends the reverse message according to the reverse route-map, thus the transmission of the reverse message is implemented, with few changes caused to the processing flow and with good compatibility and easy implementation.

Preferably, the step of sending the reverse message by using the reverse route-map comprises: the second interface obtains a reverse route policy by using the reverse route-map and sends the reverse message according to the reverse route policy. This process can realize a route policy of the reverse message and thus the flexibility of forwarding is improved.

Preferably, the process of the second interface obtaining from the first interface a reverse route-map opposite to the forward route-map may comprise: the first interface generates a reverse route-map according to the forward route-map and announces the reverse route-map to the second interface. As an optional implementation, the first interface generates a reverse route-map and then sends the reverse route-map to the second interface; in this way, in the condition that there are many second interfaces, the reverse route-map is not necessarily generated repeatedly, only once is needed; thus the processing resource of the device is saved.

Preferably, after S102, the method further comprises: the first interface receives a forward message matched with the forward route-map and sends the forward message by using the forward route-map, wherein the process of sending the forward message by using the forward route-map may comprise: the first interface obtains a forward route policy by using the forward route-map and sends the forward message according to the forward route policy. That is, after receiving the forward message, the first interface matches the forward message by using the forward route policy configured for the first interface; if match succeeds, the first interface sends the forward message according to the forward route-map, thereby the transmission of the forward message is realized.

Preferably, the Match item configuration of the forward route-map includes the information of the first VPN, a source address and a destination address of a message to be matched; the Set item configuration of the forward route-map includes the information of the second VPN; the Match item configuration of the reverse route-map includes the information of the second VPN, a source address and a destination address of a message to be matched; the Set item configuration of the reverse route-map includes the information of the first VPN. Through the configurations above, after receiving a message, the first interface and the second interface match the message with the Match item; if match succeeds, the first interface and the second interface can obtain the information of the destination VPN, so as to realize the forwarding of the message, wherein in the Match item configuration of the reverse route-map, the source address of the message to be matched is the same as the destination address in the Match item configuration of the forward route-map, and the destination address of the message to be matched is the same as the source address in the Match item configuration of the forward route-map.

Fig. 2 shows a structure diagram of a PE device according to an embodiment of the present invention. The PE device comprises a first interface 21 connected to a first VPN and a second interface 22 connected to a second VPN, wherein the first interface 21 comprises: a configuration module 23 configured to accept the configuration of a forward route-map from the first VPN to the second VPN, a generation module 24 connected to the configuration module 23 and configured to generate a reverse route-map according to the forward route-map, and an announcement module 25 connected to the generation module 24 and configured to announce the reverse route-map to the second interface 22; and the second interface 22 comprises: a first receiving module 26 configured to receive the reverse route-map.

In relevant art, both the first interface 21 and the second interface 22 included in the PE device are configured to accept the configuration of the route-map from the user, thus the maintenance is complex, the maintenance operation of the user and the maintenance cost are increased. In the PE device provided by the embodiment of the present invention, the second interface 22 obtains the route-map corresponding to the second interface 22 through the first interface 21, thereby the maintenance operation of the user is reduced and the complexity of the maintenance process of the route-map is reduced.

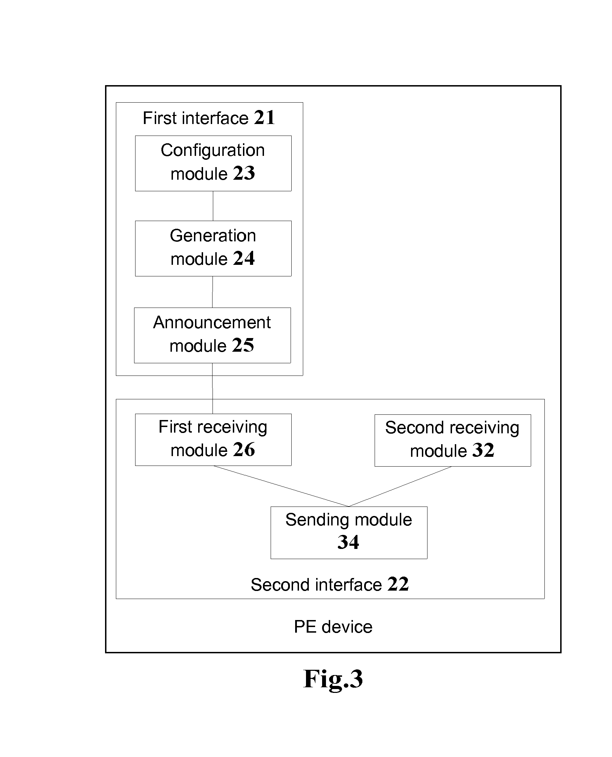

Fig. 3 shows a structure diagram of a PE device according to a preferred embodiment of the present invention. As shown in Fig. 3, preferably, the second interface 22 further comprises:
a second receiving module 32, configured to receive a reverse message matched with the reverse route-map;
a sending module 34, connected to the second receiving module 32 and the first receiving module 26, and configured to send the reverse message by using the reverse route-map.

The second interface 22 is configured, after receiving a message, to match the message by using the reverse route-map obtained by the first receiving module 26 from the first interface 21; if match succeeds, the second interfaces sends the message according to the reverse route-map, thus the transmission of the reverse message is implemented, with few changes caused to the processing flow and with good compatibility and easy implementation.

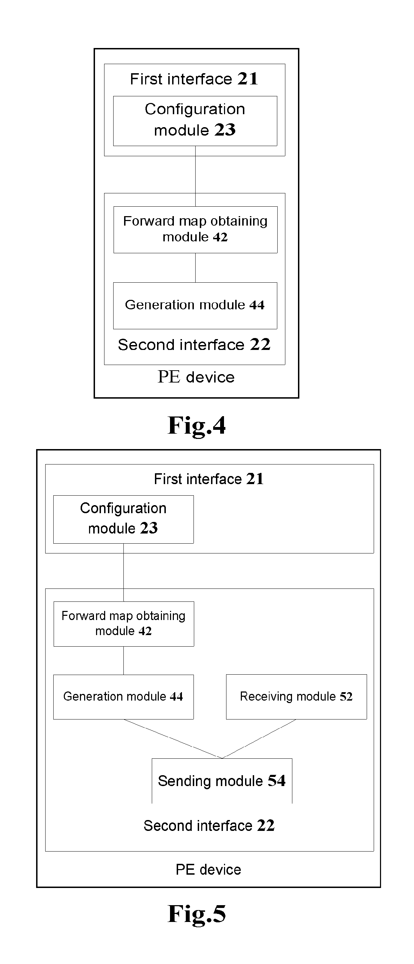

Fig. 4 shows another structure diagram of a PE device according to an embodiment of the present invention. The PE device comprises a first interface 21 connected to a first VPN and a second interface 22 connected to a second VPN, wherein the first interface 21 comprises: a configuration module 23 configured to accept the configuration of a forward route-map from the first VPN to the second VPN; the second interface 22 comprises: a forward map obtaining module 42 configured to obtain the forward route-map from the first interface 21, and a generation module 44 configured to generate a reverse route-map according to the forward route-map.

Fig. 5 shows another structure diagram of a PE device according to a preferred embodiment of the present invention. As shown in Fig. 5, preferably, the second interface 22 further comprises:
a receiving module 52, configured to receive a reverse message matched with the reverse route-map; and
a sending module 54, connected to the receiving module 52 and the generation module 44, and configured to send the reverse message by using the reverse route-map.

The second interface 22 generates a reverse route-map via the generation module 44 by using the forward route-map obtained by the forward map obtaining module 42 from the first interface 21, and matches the message according to the reverse route-map; if match succeeds, the second interface sends the message according to the reverse route-map, thus the transmission of the reverse message is implemented, with few changes caused to the processing flow and with good compatibility and easy implementation.

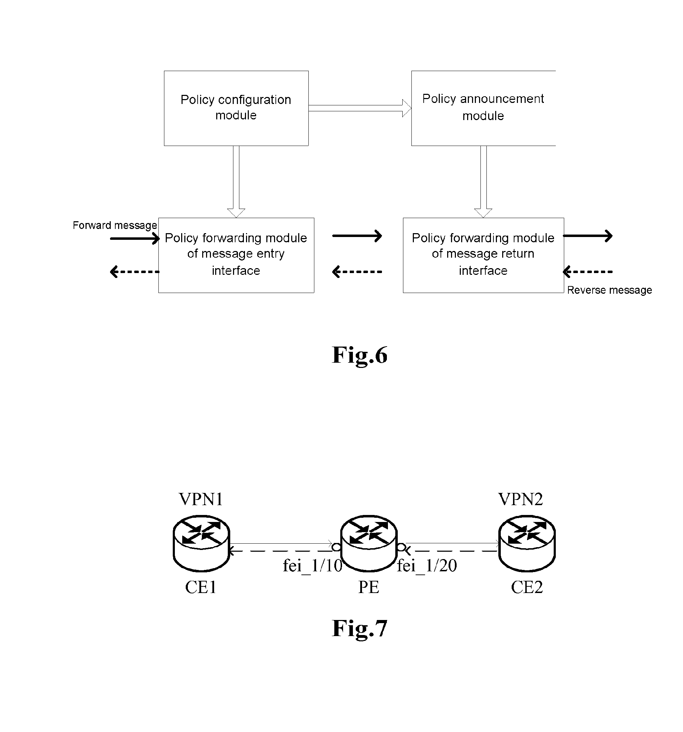

Fig. 6 shows a structure diagram of a PE device according to a preferred embodiment of the present invention. The PE device comprises:
a policy configuration module, configured to accept the specific configuration of the Match item rules and the Set forwarding items of the route-map and to control the application of the route policy of the device interface;
a policy announcement module, configured to announce the route-map configuration to the corresponding interfaces of other private networks; and
a policy forwarding module, configured to forward a message according to an effective forwarding path by using the route policy.

The policy configuration module is the basis of implementing the policy forwarding, with a main purpose of clearly knowing the specific information of the private networks expecting intercommunication; the policy announcement module is the key of implementing the message forwarding between the private networks, with a main purpose of announcing the configuration information to the interfaces of the related private networks; the policy forwarding module is configured to implement the specific forwarding.

In conjunction with the module in Fig. 6, the bidirectional forwarding of message mainly comprises the following steps:
First step: a user runs a configuration command, configures a route-map meeting requirements through the policy configuration module, and sets a source address and a destination address of a matched message and the name of other VPNs expecting intercommunication;
Second step: the user applies a route policy to an interface and enables a message entering this interface to find a corresponding exit interface by searching a route table of forwarded VPNs through the policy forwarding module to perform the forward transmission of the message.
Third step: the user runs a policy announcement command, announces the corresponding forwarding policy to all exit interfaces corresponding to the forwarded VPN through the policy announcement module and requires the exit interface to automatically configure the reverse forwarding policy, so as to realize the reverse forwarding of a returned message.

Fig. 7 shows a diagram of an application scene of the bidirectional message forwarding according to an embodiment of the present invention. The networking structure in this scene is that: a device CE1 and a device CE2 are located in different private networks, which are VPN1 and VPN2 respectively, the CE1 and the CE2 are connected through a PE device. The CE1 is connected to the PE device via a fei_1/10 interface; the CE2 is connected to the PE device via a fei_1/20 interface.

The process of the bidirectional forwarding of message comprises the following steps:
(1) first, it is needed to guarantee that the basic networking is correct. In the PE device, the fei_1/10 interface connected to the device CE1 is located in the network segment of the private network VPN1, and the fei_1/20 interface connected to the device CE2 is located in the network segment of the private network VPN2. Besides, both the fei_1/10 interface and the fei_1/20 interface can be effectively reached.
(2) a route-map is configured in the PE device, wherein the Match item configuration needs to include a source address and a destination address of a matched message, the name of a private network VPN in which the source address of the matched message is located; according to the networking structure shown in Fig. 7, the name is the name of the private network in which the VPN1 is located; the Set item configuration needs to include the name of an interconnected private network VPN in which the destination address is located; according to the networking structure shown in Fig. 7, the name is the name of the private network in which the VPN2 is located.
(3) in the PE device, through a specific configuration command, the previously configured route-map is applied to the message entry interface fei_1/10. Through the interaction flow of the module shown in Fig. 6, after the message enters the entry interface fei_1/10, the policy forwarding module forwards the matched message to the device CE2 through the exit interface fei_1/20, thus the message enters the private network VPN2.
(4) in the PE device, through a specific announcement command, the policy information in the route-map is announced to the interface corresponding to the destination private network; according to the networking structure shown in Fig. 7, the interface here refers to the interface fei_1/20 corresponding to the private network VPN2 and connected to the CE2.
(5) according to the interaction flow of the module shown in Fig. 6, after a policy announcement is received, the interface fei_1/20 automatically generates reverse forwarding policy information and informs the corresponding policy forwarding module, in this way, when a message returned from the private network VPN2 reaches the interface fei_1/20 via the CE2, the policy forwarding module forwards the message to the CE1 through the exit interface fei_1/10 according to the reverse forwarding policy, thus the message enters the private network VPN1.

Through the specific steps above, in the private network VPN1, a message sent from the CE1 can be forwarded to a corresponding destination address in the CE2 when passing through the PE device, to enter the private network VPN2 (see the solid arrow). Similarly, a message returned from the private network VPN2 also can be forwarded to the private network VPN1 corresponding to the CE1 through the link CE2-PE (see the dashed-line arrow).

To sum up, the scheme provided by the present invention reduces the maintenance operation of the user, reduces the complexity of the route-map maintenance process, implements the interconnection and intercommunication between different private networks VPNs effectively and simply, reduces the impact caused by error configuration of user, and improves the reliability and the stability of the system.

Obviously, those skilled in the art shall understand that the above-mentioned modules and steps of the present invention can be realized by using general purpose calculating device, can be integrated in one calculating device or distributed on a network which consists of a plurality of calculating devices. Alternatively, the modules and the steps of the present invention can be realized by using the executable program code of the calculating device. Consequently, they can be stored in the storing device and executed by the calculating device, or they are made into integrated circuit module respectively, or a plurality of modules or steps thereof are made into one integrated circuit module. In this way, the present invention is not restricted to any particular hardware and software combination.

The descriptions above are only the preferable embodiment of the present invention, which are not used to restrict the present invention. For those skilled in the art, the present invention may have various changes and variations. Any amendments, equivalent substitutions, improvements, etc. are all included in the scope of the protection of the present invention.

## Claims

1. A route-map processing method, wherein a first interface of a Provider Edge (PE) device is connected to a first Virtual Private Network (VPN), and a second interface of the PE device is connected to a second VPN; **characterized in that** the method comprising:
configuring a forward route-map from the first VPN to the second VPN for the first interface; and
the second interface generating a reverse route-map according to the forward route-map obtained from the first interface, or, the first interface generating a reverse route-map according to the configured forward route-map and announcing the reverse route-map to the second interface.

2. The method according to claim 1, **characterized in that** after the step of the second interface generating a reverse route-map according to the forward route-map obtained from the first interface, or, the first interface generating a reverse route-map according to the configured forward route-map and announcing the reverse route-map to the second interface, the method further comprises:
the second interface receiving a reverse message matched with the reverse route-map and sending the reverse message by using the reverse route-map.

3. The method according to claim 2, **characterized in that** the step of sending the reverse message by using the reverse route-map comprises:
the second interface obtaining a reverse route policy by using the reverse route-map and sending the reverse message according to the reverse route policy.

4. The method according to claim 1, **characterized in that** after the step of configuring a forward route-map from the first VPN to the second VPN for the first interface, the method further comprises:
the first interface receiving a forward message matched with the forward route-map and sending the forward message by using the forward route-map.

5. The method according to claim 4, **characterized in that** the step of sending the forward message by using the forward route-map comprises:
the first interface obtaining a forward route policy by using the forward route-map and sending the forward message according to the forward route policy.

6. The method according to any one of claims 1 to 5, **characterized in that** the Match item configuration of the forward route-map comprises the information of the first VPN, a source address and a destination address of a message to be matched; the Set item configuration of the forward route-map comprises the information of the second VPN; the Match item configuration of the reverse route-map comprises the information of the second VPN, a source address and a destination address of a message to be matched; the Set item configuration of the reverse route-map comprises the information of the first VPN.

7. A Provider Edge (PE) device, comprising: a first interface connected to a first Virtual Private Network (VPN) and a second interface connected to a second VPN, **characterized in that**
the first interface comprises:
a configuration module, configured to accept a configuration of a forward route-map from the first VPN to the second VPN;
a generation module, configured to generate a reverse route-map according to the forward route-map; and
an announcement module, configured to announce the reverse route-map to the second interface; and
the second interface comprises:
a first receiving module, configured to receive the reverse route-map.

8. The PE device according to claim 7, **characterized in that** the second interface further comprises:
a second receiving module, configured to receive a reverse message matched with the reverse route-map; and
a sending module, configured to send the reverse message by using the reverse route-map.

9. A Provider Edge (PE) device, comprising a first interface connected to a first Virtual Private Network (VPN) and a second interface connected to a second VPN, **characterized in that**
the first interface comprises:
a configuration module, configured to accept a configuration of a forward route-map from the first VPN to the second VPN; and
the second interface comprises:
a forward map obtaining module, configured to obtain the forward route-map from the first interface; and
a generation module, configured to generate a reverse route-map according to the forward route-map.

10. The PE device according to claim 9, **characterized in that** the second interface further comprises:
a receiving module, configured to receive a reverse message matched with the reverse route-map; and
a sending module, configured to send the reverse message by using the reverse route-map.
